Europäisches Patentamt

European Patent Office

Office européen des brevets

(19)

(11) Veröffentlichungsnummer: **0 208 979**
**B1**

(12) # EUROPÄISCHE PATENTSCHRIFT

(45) Veröffentlichungstag der Patentschrift:
07.03.90

(51) Int. Cl.⁵: **F 16 D   7/04**

(21) Anmeldenummer: 86108859.9

(22) Anmeldetag: 30.06.86

(54) Überlastsicherung.

(30) Priorität: 18.07.85 US 756130

(43) Veröffentlichungstag der Anmeldung:
21.01.87 Patentblatt 87/04

(45) Bekanntmachung des Hinweises auf die Patenterteilung: 07.03.90 Patentblatt 90/10

(84) Benannte Vertragsstaaten:
DE FR GB IT

(56) Entgegenhaltungen:
AT—B—   222 441
DE—B—  1 091 816
FR—A—   706 290
US—A—  2 633 215

(73) Patentinhaber: DEERE & COMPANY
1 John Deere Road
Moline Illinois 61265 (US)

(72) Erfinder: Demorest, Donald Wayne
405 Bryan Road
Ottumwa Iowa 52501 (US)

(74) Vertreter: Feldmann, Bernhard et al
DEERE & COMPANY European Office, Patent Department Steubenstrasse 36-42 Postfach 503
D-6800 Mannheim 1 (DE)

## Beschreibung

Die Erfindung betrifft eine Überlastsicherung, insbesondere Rutschkupplung, für die Verbindung zweier relativ zueinander beweglicher Teile, mit Ausnehmungen und diesen zugeordneten Sperrteile.

Eine derartige Überlastsicherung, wie sie aus der AT-A-222 441 und der DE-B-10 91 816 bekannt ist, enthält einen als Welle ausgebildeten ersten und treibenden Teil, in dem mehrere Sätze von Sperrteilen radial beweglich angeordnet sind, und einen anderen Teil in der Form einer getriebenen Hülse, die den einen Teil übergreift und mehrere Sätze von Ausnehmungen enthält, die mit den Sperrteilen korrespondieren. Die Sperrteile sind als Nocken ausgebildet und werden mittels Federn in die Ausnehmungen gedrückt, so daß zu einer Relativbewegung zwischen den beiden Teilen zunächst die Kraft der Federn überwunden werden muß und die Sperrteile aus den Ausnehmungen gedrängt werden müssen. Die Sätze von Sperrteilen und Ausnehmungen sind um einen bestimmten Winkelbetrag tangential versetzt, so daß immer eine bestimmte Anzahl von Sperrteilen gerade in die Ausnehmungen eingreift, während sich die verbleibenden Sperrteile außerhalb der Ausnehmungen, nämlich auf Gleitflächen zwischen ihnen, befinden. Diese Anordnung der Sperrteile ist deshalb so gewählt, damit auch bei einer erfolgten Relativbewegung zwischen den beiden Teilen stets aufs neue das maximale Drehmoment zu überwinden ist. Anderenfalls wäre nach dem Überschreiten des anfänglichen Rutschmoments, das von einem stationären Reibungszustand ausgeht, nur noch ein geringes oder gar ein negatives, dem angreifenden Drehmoment entgegenstehendes Rutschmoment vorhanden.

Diese Überlastsicherungen sind insofern nachteilig, als sie bei entsprechender Anwendung bei großen bzw. größeren zu übertragenden Drehmomenten zu viele Einzelteile benötigten und die Anzahl der zum Erhalt eines Rutsch- bzw. Restmoments erforderlichen Sperrteile mit der Anzahl der zur Lastübertragung erforderlichen Sperrteile verbunden ist und somit bei größer werdenden Drehmomenten entsprechend steigt.

Bei der bekannten Anordnung sind die einzelnen Sätze stets gleich ausgebildet, um stets ein gleich hohes Drehmoment, nämlich das Maximaldrehmoment aufzubauen, wobei die Sperrteile eines Satzes jeweils nacheinander ihre Sperrwirkung entfalten.

Die der Erfindung zugrunde liegende Aufgabe wird darin gesehen, die Überlastsicherung derart zu verbessern, daß auch bei großen zu übertragenden Drehmomenten die Gesamtzahl der Sperrteile aus Raum- und Kostengründen so gering wie möglich gehalten wird ; d. h. es soll eine Optimierung der Sperrteilezahl stattfinden.

Diese Aufgabe ist erfindungsgemäß dadurch die Lehre gemäß Patentanspruch 1 gelöst worden.

Auf diese Weise wird vermieden, daß übermäßig viele Sperrteile eingebaut werden, da nicht die Gesamtanzahl der Sperrteile an das maximale Drehmoment angepaßt werden muß, sondern nur die Anzahl der zur Drehmomentübertragung bzw. -begrenzung erforderlichen Sperrteile. Die Anordnung der weiteren Sperrteile und der ihnen zugehörigen Ausnehmungen, die sich oft auch von der Anordnung der Sperrteile unterscheidet, kann normalerweise auch bei einer Vielzahl von Überlastsicherungen, die für unterschiedlich große Maximaldrehmomente gefertigt werden, gleich bleiben, so daß sich eine Produktionskostenreduktion ergibt.

Das von dem ersten Satz Sperrteile und dem weiteren Satz Sperrteile jeweils aufgebaute Drehmoment ist also stets unterschiedlich und wird den jeweiligen Ansprüchen dennoch gerecht.

In den Unteransprüchen sind weitere vorteilhafte Maßnahmen angegeben, die den Aufbau von erfindungsgemäßen Überlastsicherungen beschreiben. Die Sperrteile können sowohl als Nocken wie auch als Zapfen oder Kugeln ausgeführt sein. Desgleichen bedeutet der Ausdruck « federbelastet » nicht, daß nur eine mechanische Feder wie eine Schrauben-, Blatt-oder Gummifeder Anwendung finden kann, sondern daß auch hydraulische oder pneumatische Federkissen denkbar sind. Außerdem können die zueinander beweglichen Teile auch Bestandteile der Überlastsicherung sein, anstatt aus Endstücken zweier gekuppelter Wellen oder dergleichen eines Antriebsstranges zu bestehen.

In der Zeichnung sind zwei nachfolgend näher beschriebene Ausführungsbeispiele der Erfindung sowie verschiedene Belastungsdiagramme dargestellt. Es zeigt :

Figur 1 ein erstes Ausführungsbeispiel einer erfindungsgemäßen Überlastsicherung im vertikalen Längshalbschnitt und in Seitenansicht,

Figur 2 einen Schnitt gemäß der in Figur 1 gezeigten Linie und Pfeile 2,

Figur 3 einen Schnitt gemäß der in Figur 1 gezeigten Linie und Pfeile 3,

Figur 4 ein weiteres Ausführungsbeispiel einer erfindungsgemäßen Überlastsicherung im vertikalen Längshalbschnitt und in Seitenansicht,

Figur 5 einen Schnitt gemäß der in Figur 4 gezeigten Linie und Pfeile 5,

Figur 6 ein Belastungsdiagramm einer herkömmlichen Überlastsicherung und

Figur 7 ein Belastungsdiagramm einer erfindungsgemäßen Überlastsicherung.

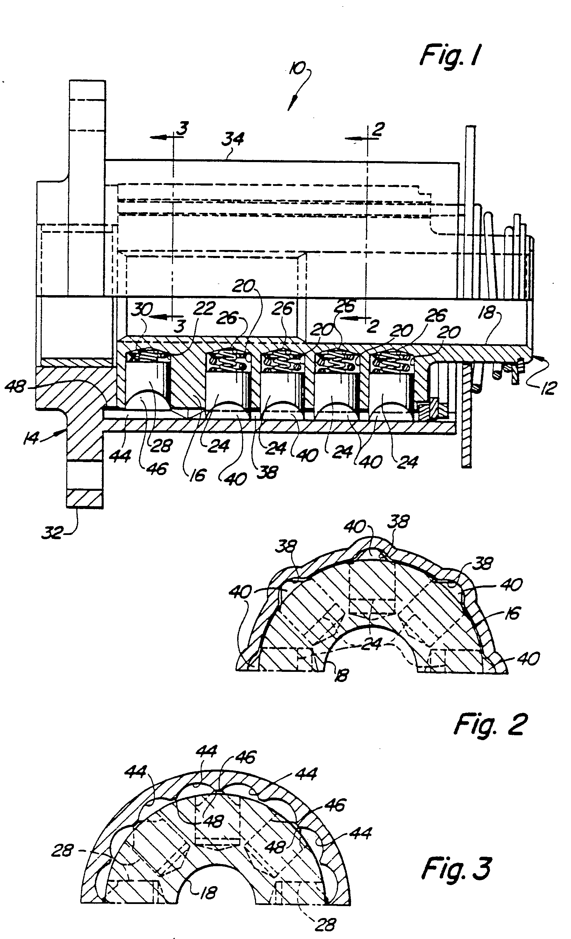

Eine in den Figuren 1 bis 3 dargestellte Überlastsicherung 10 in Nocken- oder Rastenausführung enthält einen treibenden und einen getriebenen Teil 12 und 14, wobei der treibende Teil 12 in der Form einer zylindrischen Nabe 16 ausgebildet ist, die eine sich axial erstreckende Befestigungsbohrung 18 mit einer nicht gezeigten Innenverzahnung zur Verbindung mit einer außenverzahnten Antriebswelle enthält. Vier axial zueinander ausgerichtete einen ersten Satz bildende Gruppen von acht winkelgleich voneinander getrennten und sich radial erstreckenden Sackbohrungen 20 sind mit gleichen Abständen zueinander auf der Länge der Nabe 16 angeordnet, und eine einen fünften Satz bildende Gruppe von acht ebenfalls winkelgleich voneinander getrennten Sackbohrungen 22 ist mit axialem Abstand axial nach einer endseitigen Gruppe Sackbohrungen 20 ausgerichtet. In jeder Sackbohrung 20 ist ein lastübertragender Sperrteil 24 aufgenommen, dessen inneres Ende an einer Schraubendruckfeder 26, die in die Sackbohrung 20 eingesetzt ist, anliegt. Gleichermaßen nimmt jede Sackbohrung 22 einen weiteren Sperrteil 28 in sich auf, dessen innere Endfläche ebenfalls von einer in die Sackbohrung 22 eingesetzten Schraubendruckfeder 30 beaufschlagt wird.

Der getriebene Teil 14 enthält einen scheibenförmigen Befestigungsflansch 32, der an ein Ende einer im wesentlichen zylindrischen Hülse 34, die die Nabe 16 des getriebenen Teils 12 in sich aufnimmt, angeschweißt ist. Die Hülse 34 enthält einen relativ langen und die Sperrteile 24 umfassenden Abschnitt, an dessen Innenwandung acht winkelgleich voneinander getrennte Ausnehmungen 38 mit kreisförmigem Querschnitt in Richtung der Längsachse der Hülse 34 vorgesehen sind, die jeweils die konischen Endbereiche 40 der acht Sperrteile 24 jeder Gruppe aufnehmen, wenn sich die Überlastsicherung 10 in einem nicht durchrutschenden Zustand befindet. Die Hülse 34 enthält auch einen kleineren Abschnitt, der die weiteren Sperrteile 28 umgibt und sechzehn Ausnehmungen 44 von kreisförmigem Querschnitt aufweist, die ebenfalls längs in seine Innenwandung winkelgleich eingearbeitet sind, wobei in diesem Ausführungsbeispiel jeweils ein Paar von Ausnehmungen 44 winkelgleich mit einem Betrag von 11,5 Grad zu jeder Seite der Ausnehmungen 38 versetzt ist. Die konisch verlaufenden Endbereiche 46 der weiteren Sperrteile 28 liegen jeweils an zwischen den Ausnehmungen 44 gelegenen Reibflächen 48 an, wenn sich die Überlastsicherung 10 in ihrem nicht durchrutschenden Zustand befindet.

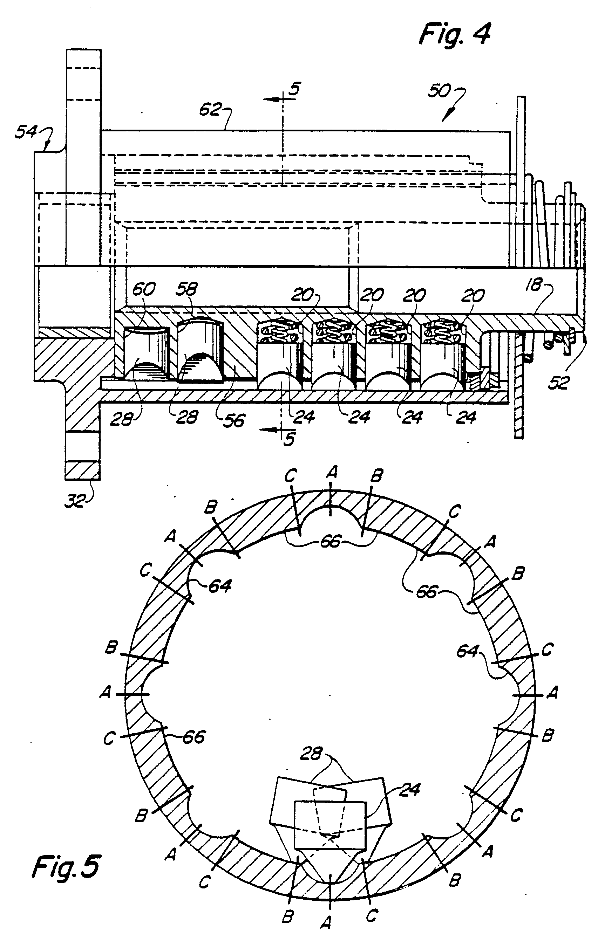

In den Figuren 4 und 5 ist ein weiteres Ausführungsbeispiel der Erfindung dargestellt, wobei mit dem zuvor beschriebenen Ausführungsspiel übereinstimmende Teile mit denselben Bezugszeichen versehen sind. Es ist eine Überlastsicherung 50 mit einem treibenden und einem getriebenen Teil 52 und 54 abgebildet, wobei der treibende Teil 52 wiederum in der Form einer zylindrischen Nabe 56 ausgebildet ist, die eine sich axial in ihr erstreckende Befestigungsbohrung 18 mit einer nicht dargestellten Innenverzahnung zur Aufnahme einer außenverzahnten Welle aufweist. Vier axial zueinander ausgerichtete Gruppen von acht winkelgleich angeordneten, radial verlaufenden Sackbohrungen 20 eines ersten Satzes sind mit jeweils gleichem Abstand längs auf der Nabe 56 angeordnet. Eine fünfte bzw. eine sechste Gruppe von acht winkelgleich voneinander getrennt angeordneten und sich radial erstreckenden Sackbohrungen 58 bzw. 60 eines weiteren Satzes sind jeweils um 11,5 Grad in der einen Richtung bzw. um 11,5 Grad in der anderen Richtung mit Bezug auf die vier Sätze von Sackbohrungen 20 vorgesehen. Die Sackbohrungen 20 nehmen Sperrteile 24 und Schraubendruckfedern 26 auf, während in die Sackbohrungen 58 und 60 der fünften und der sechsten Gruppe jeweils ein weiterer Sperrteil 28 und jeweils eine Schraubendruckfeder 30 eingesetzt ist. In Figur 5 steht der Buchstabe A jeweils für die Sperrteile 24 und die Buchstaben B und C für die weiteren Sperrteile 28, womit deren Stellung bei einem bestimmten Zustand der Überlastsicherung angezeigt wird.

Der getriebene Teil 54 enthält den scheibenförmigen Befestigungsflansch 32, der mit dem einen Ende einer zylindrischen Hülse 62 verbunden ist, die in sich die Nabe 56 des treibenden Teils 52 aufnimmt. Die Innenwandung der Hülse 62 ist mit acht winkelgleich gelegenen, sich längs erstreckenden Ausnehmungen 64 versehen, die einen kreisförmigen Querschnitt aufweisen und mittels Gleitflächen 66 miteinander in Verbindung stehen. Wenn sich, wie dies dargestellt ist, die Überlastsicherung 50 in einem nicht durchrutschenden Zustand befindet, nehmen die Sperrteile 24 ihre Stellung in den Ausnehmungen 64 ein, während die weiteren Sperrteile 28 der fünften bzw. der sechsten Gruppe an dem Endbereich der einen Reibfläche 66 bzw. an dem Endbereich der anderen Reibfläche 66 anliegen.

Man erkennt daher, daß mit den jeweiligen Endbereichen der zugehörigen Reibflächen 66 an den sich gegenüberliegenden Seiten einer gegebenen Ausnehmung 64 jeweils ein weiterer Sperrteil 28 des fünften und ein weiterer Sperrteil 28 der sechsten Gruppe anliegt. Diese Ausführungsform hat gegenüber der vorherigen Ausführungsform den Unterschied, daß die zylindrische Hülse 62 des getriebenen Teils 54 mit gleichen Ausnehmungen 64 versehen sein kann, die sich über die volle Länge der Hülse 62 erstrecken und somit leichter herzustellen sind.

Es soll hier darauf hingewiesen werden, daß, obwohl bei den vorgenannten Ausführungsspielen vier Gruppen mit jeweils acht Sperrteilen 24 vorgesehen sind, auch andere Anzahlen von Gruppen und Sperrteilen 24 pro Gruppe verwendet werden können, und zwar abhängig von der Größe des normalerweise zu übertragenden Drehmoments der Überlastsicherung 10, 50. Außerdem können die gezeigten Sperrteile und weiteren Sperrteile 24 und 28 auch durch andere Elemente, z. B. durch Kugeln, ersetzt werden. Ferner sind auch Ausführungsformen denkbar, bei denen sich die Sperrteile und die weiteren Sperrteile 24 und 28 nicht radial, sondern axial erstrecken.

Die Funktion der beiden Überlastsicherungen 10 und 50 ist gleich. So werden bei einem Überschreiten des von entweder der Überlastsicherung 10 oder der Überlastsicherung 50 übertragbaren Drehmoments in einem Antriebsstrang deren Sperrteile 24 von den ihnen zugehörigen Ausnehmungen 38, 64 radial nach innen gedrängt, um so dem treibenden und dem getriebenen Teil 12 und 14 bzw. 52 und 54 zu erlauben, daß sie sich relativ zueinander bewegen, also durchrutschen können, wobei sich die Sperrteile 24 dann ständig in die und aus den Ausnehmungen 38, 64 bewegen. Zur gleichen Zeit wie die Sperrteile 24 sich aus den Ausnehmungen 38 und 64 bewegen, werden auch die weiteren Sperrteile 28 radial nach außen in die ihnen zugeordneten Ausnehmungen 44, 64 gedrängt, so daß sie einen ausreichenden Widerstand zwischen dem treibenden und dem getriebenen Teil 12, 14 und 52, 54 aufbringen und so vermeiden, daß sich der treibende Teil 12, 52 derart stark von dem getriebenen Teil 14, 54 losreißt, daß dadurch negative Drehmomentspitzen entstehen, die schädlich für die mit der Überlastsicherung 10, 50 verbundenen Wellen, Ketten oder dergleichen sind. Vorzugsweise halten die weiteren Sperrteile 28 einen derart starken Widerstand bei der Relativdrehung der beiden Teile 12, 14, 52, 54 aufrecht, so daß eine positive Drehmomentübertragung stets gegeben ist.

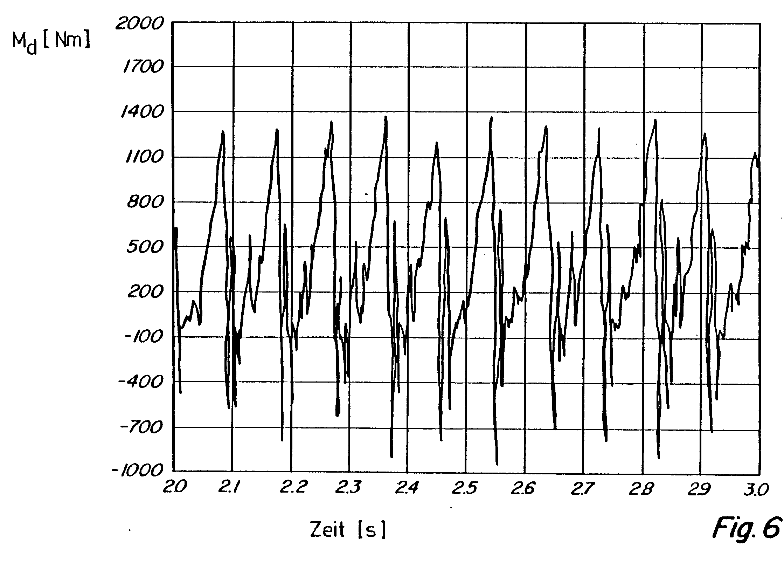

In Figur 6 ist in einem Diagramm der Drehmomentverlauf einer herkömmlichen Überlastsicherung gezeigt, eine Überlastsicherung also, die der in Figur 1 dargestellten ohne die weiteren Sperrteile 28 und die ihnen zugehörigen Ausnehmungen 44 während des Durchrutschens entspricht. Die aus dem Diagramm entnehmbaren positiven Drehmomentspitzen dokumentieren die Zeitpunkte, in denen die Sperrteile 24 aus ihren Ausnehmungen 38 rutschen, während die negativen Drehmomentspitzen die Freigabe nach dem Spannen der Sperrteile 24 in den Antriebskomponenten auf der anderen Seite der Überlastsicherung anzeigen. Das maximale Rutschdrehmoment liegt bei ca. 1 400 Nm, während das minimale Rutschdrehmoment bei ca. —950 Nm liegt, bei einem negativen Wert also, der im Betrag mehr als 65 % des positiven Wertes ausmacht. Es dauert lediglich 0,026 Sekunden, um von dem maximalen Drehmoment zu dem minimalen Drehmoment zu gelangen, und dieser schnelle Lastwechsel der Antriebskomponenten zwischen negativen und positiven Drehmomentwerten resultiert in einem Hammern bzw. in Stoßbelastungen zwischen Teilen wie Verzahnungen, Zahnrädern und dergleichen.

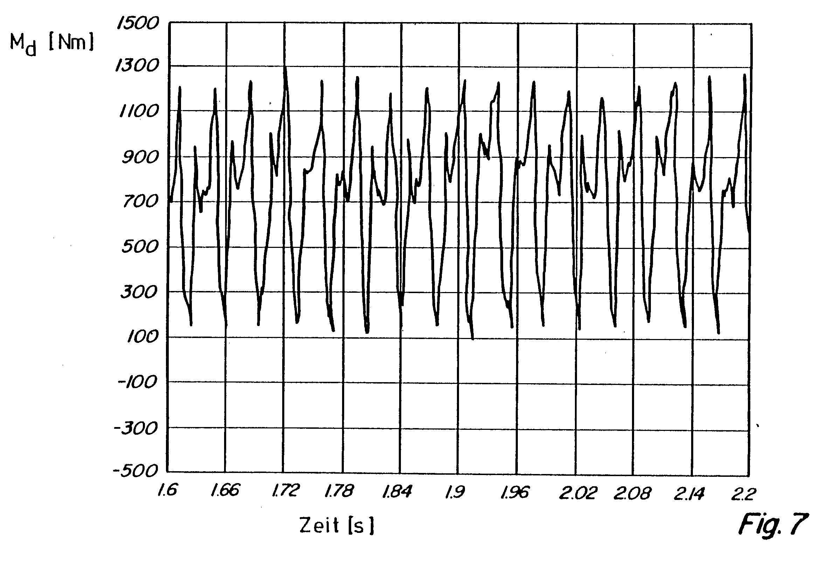

Im Gegensatz hierzu zeigt das Diagramm von Figur 7 den Drehmomentverlauf der in Figur 1 gezeigten Überlastsicherung 10 während des Durchrutschens. Man kann erkennen, daß mittels der weiteren Sperrteile 28 und der zugehörigen Ausnehmungen 44 ein Maximalwert von 1 300 Nm und ein Minimalwert von 100 Nm erreicht worden sind. Demnach liegt stets ein positives Rutschdrehmoment zwischen dem treibenden und dem getriebenen Teil 12 und 14 an, mit der Konsequenz, daß die Antriebskomponenten stets in der normalen Übertragungsrichtung belastet werden, was Lastwechsel bzw. Stoßbelastungen zwischen den verschiedenen treibenden und getriebenen Antriebskomponenten reduziert.

Außerdem reduziert sich die Drehmomentschwankung, der die verbesserte und erfindungsgemäße Überlastsicherung 10 unterliegt, auf einen Wert von 1 200 Nm, während die Drehmomentschwankung der herkömmlichen Überlastsicherung bei 2 350 Nm lag. Diese viel geringere Drehmomentschwankung führt zu einer höheren Lebensdauer der Antriebskomponenten, die mit der erfindungsgemäßen Überlastsicherung 10 oder 50 versehen sind.

## Patentansprüche

1. Überlastsicherung (10, 50), insbesondere Rutschkupplung, für die Verbindung relativ zueinander beweglicher Teile (12, 14, 52, 54), von denen zum Aufbau eines maximalen Drehmomentes einer der Teile Ausnehmungen (38, 64) und der andere Teil diesen zugeordnete federbelastete Sperrteile (24, 28) aufweist, wobei die Sperrteile in zwei Sätze gegliedert sind, die abwechselnd in Drehmoment übertragenden Eingriff mit den Ausnehmungen (38, 64) kommen und von denen der erste Satz Sperrteile (24) in wenigstens einer Gruppe enthält, die insgesamt das maximale Drehmoment übertragen, während der weitere Satz Sperrteile (28) in wenigstens einer Gruppe enthält, die insgesamt ein geringeres Drehmoment übertragen.

2. Überlastsicherung nach Anspruch 1, dadurch gekennzeichnet, daß in dem weiteren Satz von Sperrteilen (28) doppelt so viele Ausnehmungen (44) den Sperrteilen (28) zugeordnet sind wie in dem ersten Satz von Sperrteilen (24).

3. Überlastsicherung nach Anspruch 1, dadurch gekennzeichnet, daß bei gleicher Anzahl von Ausnehmungen (64) bei dem weiteren Satz von Sperrteilen (28) und dem ersten Satz von Sperrteilen (24) die Anzahl der Sperrteile (28) je Gruppe im weiteren Satz doppelt so groß ist wie die Anzahl der Sperrteile (24) im ersten Satz.

4. Überlastsicherung nach Anspruch 1, dadurch gekennzeichnet, daß die Sperrteile im weiteren Satz gegenüber den Sperrteilen (24) im ersten Satz oder die ihnen jeweils zugeordneten Ausnehmungen (38, 44, 64) tangential versetzt sind.

5. Überlastsicherung nach Anspruch 2, dadurch gekennzeichnet, daß der weitere Satz acht Sperrteile (28) und 16 dazugehörige Ausnehmungen (44) und der erste Satz vier Gruppen von jeweils acht Sperrteilen (24) und jeweils acht dazugehörige Ausnehmungen (38) aufweist.

6. Überlastsicherung nach Anspruch 3, dadurch gekennzeichnet, daß insgesamt sechs einander gleiche Gruppen von jeweils acht Ausnehmungen (64) und jeweils acht Sperrteilen (24, 28) des ersten bzw. des weiteren Satzes vorgesehen sind, denen vier Gruppen Sperrteile (24) des ersten Satzes und zwei Gruppen Sperrteile (28) des weiteren Satzes zugeordnet sind, wobei die Sperrteile (28) des weiteren Satzes im gleichen Maß in und entgegen der Drehrichtung der Überlastsicherung (50) gegenüber den Sperrteilen (24) des ersten Satzes versetzt sind.

## Claims

1. Overload safety device (10, 50), especially slipping clutch, for the connection of parts (12, 14, 52, 54) movable relative to one another, of which one of the parts has recesses (38, 64) and the other part has associated spring loaded detent elements (24, 28) for establishing a maximum torque, wherein the detent elements are divided into two sets which come alternately into torque-transmitting engagement with the recesses (38, 64) and of which the first set comprises detent elements (24) in at least one group which together transmit the maximum torque, while the further set comprises detent elements (28) in at least one group which together transmit a smaller torque.

2. Overload safety device according to claim 1, characterized in that in the further set of detent elements (28) twice as many recesses (44) are associated with the detent elements (28) as in the first set of detent elements (24).

3. Overload safety device according to claim 1, characterized in that, with the same number of recesses (64) for the further set of detent elements (28) and the first set of detent elements (24) the number of detent elements (28) per group in the further set is twice as large as the number of the detent elements (24) in the first set.

4. Overload safety device according to claim 1, characterized in that the detent elements in the further set are tangentially displaced relative to the detent elements (24) in the first set or the respectively associated recesses (38, 44, 64).

5. Overload safety device according to claim 2, characterized in that the further set comprises eight detent elements (28) and 16 recesses (44) pertaining thereto and the first set comprises four groups each of eight detent elements (24) and eight recesses (38) pertaining to each of these.

6. Overload safety device according to claim 3, characterized in that there are provided in all six like groups of eight recesses (64) each and in each case eight detent elements (24, 28) of the first and the furthers sets respectively, of which four groups of detent elements (24) are associated with the first set and two groups of detent elements (28) with the further set, the detent elements (28) of the further set being displaced by the same amount in and opposite to the direction of rotation of the overload safety device (50) relative to the detent elements (24) of the first set.

## Revendications

1. Dispositif de sécurité contre les surcharges (10, 50), en particulier accouplement à glissement, pour relier des composants mutuellement mobiles (12, 14, 52, 54) dont, pour établir un couple maximum, l'un des composants comporte des creux (38, 64) et l'autre composant des éléments d'encliquetage (24, 28) qui leur correspondent soumis à l'action de ressorts, les éléments d'encliquetage étant subdivisés en deux séries qui s'accouplent alternativement avec les creux (38, 64) de façon à transmettre des couples et dont la première série comprend des éléments d'encliquetage (24) en au moins un groupe qui transmettent au total le couple maximum, tandis que l'autre série comprend des éléments d'encliquetage (28) en au moins un groupe qui transmettent au total un couple plus faible.

2. Dispositif de sécurité contre les surcharges selon la revendication 1, caractérisé en ce que, pour la seconde série d'éléments d'encliquetage (28), il y a deux fois plus de creux (44) correspondant aux éléments d'encliquetage (28), que pour la première série d'éléments d'encliquetage (24).

3. Dispositif de sécurité contre les surcharges selon la revendication 1, caractérisé en ce que, pour un même nombre de creux (64) pour la seconde série d'éléments d'encliquetage (28) et la première série d'éléments d'encliquetage (24), le nombre d'éléments d'encliquetage (28) par groupe dans la seconde série est deux fois plus élevé que le nombre des éléments d'encliquetage (24) dans la première série.

4. Dispositif de sécurité contre les surcharges selon la revendication 1, caractérisé en ce que les éléments d'encliquetage de la seconde série sont, par rapport aux éléments d'encliquetage (24) de la première série, ou bien les creux (38, 44, 64) qui leur correspondent respectivement, décalés tangentiellement.

5. Dispositif de sécurité contre les surcharges selon la revendication 2, caractérisé en ce que la seconde série comporte huit éléments d'encliquetage (28) et seize creux (44) correspondants, et la première série quatre groupes de huit éléments d'encliquetage (24) chacun et huit creux (38) correspondants.

6. Dispositif de sécurité contre les surcharges selon la revendication 3, caractérisé en ce qu'on prévoit au total six groupes mutuellement identiques de huit creux (64) chaque fois et de huit éléments d'encliquetage (24, 28) chaque fois de la première série et respectivement de la seconde série, auxquels correspondent quatre groupes d'éléments d'encliquetage (24) de la première série et deux groupes d'éléments d'encliquetage (28) de la seconde série, les éléments d'encliquetage (28) de la seconde série étant décalés dans la même mesure et en sens opposé du sens de rotation du dispositif de sécurité contre les surcharges (50) par rapport aux éléments d'encliquetage (24) de la première série.

Fig. I

Fig. 2

Fig. 3

*Fig. 4*

*Fig. 5*

Fig. 6

$M_d$ [Nm]

Zeit [s]

EP 0 208 979 B1

**$M_d$ [Nm]**

**Zeit [s]**

*Fig. 7*

EP 0 208 979 B1